(19) Europäisches Patentamt
European Patent Office
Office européen des brevets

(11) Publication number: **0 051 947**
**B1**

# (12) EUROPEAN PATENT SPECIFICATION

(45) Date of publication of patent specification: **19.06.85**

(51) Int. Cl.$^4$: **H 01 M 6/18**

(21) Application number: **81305019.2**

(22) Date of filing: **23.10.81**

## (54) Solid state electrolytes for electrochemical cells.

(30) Priority: **24.10.80 US 200276**

(43) Date of publication of application:
**19.05.82 Bulletin 82/20**

(45) Publication of the grant of the patent:
**19.06.85 Bulletin 85/25**

(84) Designated Contracting States:
**DE FR GB**

(56) References cited:
**EP-A-0 000 785**
**EP-A-0 017 400**
**US-A-3 980 499**

**JOURNAL OF THE ELECTROCHEMICAL SOCIETY, vol. 126, no. 8, August 1979 Manchester, New Hampshire US page 305C, abstract no. 5 C.C. LIANG et al. "Conduction characteristics of Li2A12C16O solid".**

(73) Proprietor: **RAYOVAC Corporation**
**101 East Washington Avenue**
**Madison Wisconsin 53703 (US)**

(72) Inventor: **Joshi, Ashok Vendimadhav**
**117 Shankar Niwas**
**Shivaji Park Road, No. 3 Bombay (IN)**
Inventor: **Sholette, William Paul**
**826 Martha Lane**
**Warminster Pennsylvania 18974 (US)**

(74) Representative: **Wuesthoff, Franz, Dr.-Ing. et al**
**Patentanwälte Wuesthoff -v. Pechmann-Behrens-Goetz Schweigerstrasse 2**
**D-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 051 947 B1

**Description**

The present invention relates to solid state electrolytes for use in solid state electrochemical cells having lithium anodes. It also relates to a process of making such an electrolyte and cells that contain such an electrolyte.

A number of solid state electrolytes are known, e.g. LiI, that are capable of carrying electric current electrolytically by the transport of lithium ions but at the same time are electronic insulators.

It is desirable to provide a solid state electrolyte having a conductivity of about $10^{-6}$ (ohm-centimetres)$^{-1}$ ($10^{-6}$ (ohm-cm)$^{-1}$) or greater. This level of conductivity makes an electrolyte useful in low rate, high energy density, solid state battery systems capable of powering microelectronic circuits.

According to the present invention, there is provided a solid-state electrolyte for use in electrochemical devices, which electrolyte comprises an interdiffused mixture of lithium, oxygen, a halide and at least one of M′ and M″, wherein the composition of the electrolyte is such as would result from the interdiffusion of a material "A" and a material "B" with or without alumina, material "A" being representable by the formula

$$LiM'O_n$$

and material "B" by the formula

$$Li_xM''_yX_z$$

wherein, in the formulas,

X represents a halide atom,

M′ and M″ can be the same or different and represent at least one element from Groups IIA, IIIB, IIB, IVA, IVB, VA and VB of the Periodic Table,

n is a number depending on the valence of M′ and calculated by

$$n=\frac{1+\text{valence of } M'}{2}$$

x is 0 or a number greater than 0 and not more than 1,

y is a number from 0.1 to 1, and

z is a number depending on the valence of M″ and calculated by

$$z=x+y\ (\text{valence of } M'').$$

For the avoidance of doubt, the Periodic Table referred to above is that in accordance with the IUPAC Rules.

Generally speaking, in the electrolytes of the present invention, the materials "A" and "B" may be used in proportions of from 10 to 40 mole percent (m/o) of "B" with the balance being made up essentially by "A". In making the electrolytes of the present invention, it is advantageous to prepare a thorough mixture of dry powders of materials "A" and "B" and then heat that mixture to a temperature in excess of the melting point of one of the constituents, maintain that temperature for a time of at least 0.25 hour, cool the thus interdiffused material rapidly and grind the resultant cooled mass to a powder which can be pressed into the form of an electrolyte pellet.

In carrying the invention into practice, it is advantageous to use as M′ and M″, which may be the same element or different, one or more of aluminium, boron and calcium. These elements are relatively cheap and form stable, solid state oxides and halides. The halogen used in the electrolytes of the present invention is advantageously iodine in view of the known quality of lithium iodide of being a better solid state electrolytic conductor than lithium chloride, lithium bromide or lithium fluoride. The electrolytes of the present invention can contain, in addition to materials "A" and "B", aluminium oxide in amounts up to about 50% of the total molar composition making an illustrative range of materials in electrolytes, in mole percent, from 5% to 40% "B", from 30% to 90% "A" and up to about 50% alumina.

It will be appreciated that although the electrolytes of the present invention may be made by interdiffusing materials "A" and "B" (and optionally known additives, for example alumina), the resultant electrolyte may not necessarily contain either material "A" or "B" as such. It is, however, intended that electrolytes resulting from interdiffusion of materials "A" and "B" are within the scope of the present invention regardless of the nature of the chemical species actually present in the electrolytes. The term "material" has been deliberately used herein instead of, and in preference to, the word "compound" because it is intended that the term "material" includes not only a true chemical compound but also a mixture or assemblage of materials or constituents that together contain the atoms in the same proportions as compounds of the formula "A" and "B". For example, if material "A" is $LiAlO_2$ and material "B" is $LiMgI_3$, it matters not at all to this invention whether the materials interdiffused are these compounds *per se* or any mixture or assemblage of the constituents $Li_2O$, $Al_2O_3$, LiI and $MgI_2$ or even the elements *per se* provided that the ingredients are added in the amounts represented by the respective oxidic and iodic

formulas and in the proportions of materials "A" and "B" as required herein. It will also be appreciated that it is not necessary for the constituents of material "A" or "B" to be introduced into an interdiffusing zone at the same time.

The present invention also provides a process of making the electrolytes described above, which process comprises interdiffusing a mixture of materials "A" and "B" with or without alumina.

The present invention will now be described in more detail in the following Examples:

Example I

A mixture of 70 mole percent (m/o) $LiBO_2$ and 30 m/o $CaI_2$ was ground, heated to 800°C for 1/2 hour, quenched and reground. A solid electrolyte was thus formed, having the compositional formula 0.7 $LiBO_2$, 0.3 $CaI_2$. Conductivity cells were typically made by pressing electrolyte to 100,000 pounds per square inch (psi) (689,000 $kN/m^2$) in a 0.60" (15 mm) diameter steel die and then pressing on lithium electrodes at 50,000 psi (345,000 $kN/m^2$). The D.C. conductivity was measured at room temperature and was found to be $4\times10^{-6}$ $(ohm\text{-}cm)^{-1}$. Also no apparent reaction was observed with the lithium electrodes, thus indicating a stable electrolyte. Two solid-state cells (1.5 cm diameter) were fabricated using this electrolyte with lithium as an anode and a mixture of $BiBr_3$, $TiS_2$ and Bi as the cathode. These cells showed open circuit voltages (OCV) of 2.67 volts and short circuit currents of 130 amps at room temperature.

Example II

A mixture of 75 m/o $LiAlO_2$ and 25 m/o $LiAlI_4$ was ground for one hour and then heated at 900°C for 15 minutes. This mixture was then quenched to ambient temperature and reground to a powder. A conductivity cell was fabricated using this mixture as solid electrolyte and lithium as electrodes. The conductivity was $9\times10^{-7}$ $(ohm\text{-}cm)^{-1}$ at ambient temperature. No apparent reaction was observed for this electrolyte with lithium electrodes indicating a stable electrolyte.

Example III

A mixture of 70 m/o $LiAlO_2$ and 30 m/o $CaI_2$ was ground for one hour and then heated to 900°C for 30 minutes. This hot mix was then quenched to room temperature. After the material had cooled, it was ground for one hour. A conductivity cell was fabricated using this electrolyte and lithium electrodes. The conductivity was $1.7\times10^{-6}$ $(ohm\text{-}cm)^{-1}$ at ambient temperature. No apparent reaction was observed at Li/electrolyte interface indicating a stable electrolyte.

Example IV

An electrolyte made by interdiffusing 60 m/o $LiAlO_2$, 20 m/o $LiAlI_4$ and 20 m/o $Al_2O_3$ for one hour at 900°C exhibited a room temperature conductivity of $4.0\times10^{-6}$ $(ohm\text{-}cm)^{-1}$.

Example V

An electrolyte containing 60 m/o $LiBO_2$, 20 m/o $LiAlI_4$ and 20 m/o $Al_2O_3$ and interdiffused at 500°C for 24 hours exhibited a room temperature conductivity of $1.2\times10^{-6}$ $(ohm\text{-}cm)^{-1}$.

Additional Examples are set forth in the following Table.

TABLE

| Ex. No. | Composition (m/o) | Interdiffusion Temp. (°C) | Interdiffusion Time (hr) | Conductivity $(ohm\text{-}cm)^{-1}$ |
|---|---|---|---|---|
| VI | $LiBO_2$—67<br>$CaI_2$—33 | 800 | 0.35 | $5.4\times10^{-6}$ |
| VII | $LiBO_2$—60.3<br>$CaI_2$—29.7<br>$Al_2O_3$—10 | 800 | 0.35 | $4.3\times10^{-6}$ |
| VIII | $LiBO_2$—53.3<br>$CaI_2$—26.7<br>$Al_2O_3$—20 | 800 | 0.35 | $3.5\times10^{-6}$ |
| IX | $LiBO_2$—44.9<br>$CaI_2$—22.1<br>$Al_2O_3$—33 | 800 | 0.35 | $1.3\times10^{-6}$ |

**Claims**

1. A solid state electrolyte for use in electrochemical cells, which electrolyte comprises an interdiffused mixture of lithium, oxygen, a halide and at least one of M' and M", wherein the composition of the

electrolyte is such as would result from the interdiffusion of a material "A" and a material "B" with or without alumina, material "A" being representable by the formula

$$LiM'O_n$$

and material "B" by the formula

$$Li_xM''_yX_z$$

wherein, in the formulas,

X represents a halide atom,

M' and M" can be the same or different and represent at least one element from Groups IIA, IIIB, IIB, IVA, IVB, VA and VB of the Periodic Table,

n is a number depending on the valence of M' and calculated by

$$n=\frac{1+\text{valence of } M'}{2}$$

x is 0 or a number greater than 0 and not more than 1,

y is a number from 0.1 to 1, and

z is a number depending on the valence of M" and calculated by

$$z=x+y \text{ (valence of } M'').$$

2. An electrolyte as claimed in claim 1, wherein X represents an iodine atom.

3. An electrolyte as claimed in claim 1 or claim 2, wherein M' and M" are the same or different and represent one or more elements of aluminium, boron and calcium.

4. An electrolyte as claimed in claim 1 wherein material "A" is $LiAlO_2$ and material "B" is $CaI_2$.

5. An electrolyte as claimed in claim 1 wherein material "A" is $LiBO_2$ and material "B" is $CaI_2$.

6. An electrolyte as claimed in any one of claims 1 to 5, which contains alumina in an amount not greater than 50 mole percent.

7. An electrolyte as claimed in any one of claims 1 to 5, whose composition is such as would result from the interdiffusion of from 5 to 40 mole percent of material "B", from 30 to 90 mole percent of material "A" and from 0 to 50 mole percent of alumina.

8. An electrolyte as claimed in any one of claims 1 to 7, having a conductivity of about $10^{-6}$ (ohm-cm)$^{-1}$ or greater.

9. A process of making a solid state electrolyte as claimed in any one of claims 1 to 8, which comprises interdiffusing a mixture of material "A" and material "B" with or without alumina.

10. A process as claimed in claim 9, wherein the mixture of material "A" and material "B" is kept at a temperature in excess of the melting point of one of its constituents for at least 0.25 hour, quenched and ground to a fine powder.

11. An electrochemical cell having a lithium anode and a solid-state electrolyte as claimed in any one of claims 1 to 8.

**Revendications**

1. Électrolyte solide pour piles électrochimiques comprenant un mélange interdiffusé de lithium, d'oxygène, d'un halide et d'au moins un (élément) M' et M", la composition de l'électrolyte étant telle qu'elle résulterait de l'interdiffusion d'une matière "A" et d'une matière "B" avec de l'alumine ou non, la matière "A' pouvant répondre à la formule

$$LiM'O_n$$

et la matière "B" pouvant répondre à la formule

$$Li_xM''_yX_z$$

dans lesquelles formules

X représente un atome d'halogène,

M' et M" pouvant être identiques ou differents représentent au moins un des éléments des groupes IIA, IIIB, IIB, IVA, IVB, VA et VB de la classification périodique des éléments,

n est un nombre dépendant de la valence de M' et calculé par

$$n=\frac{1+\text{la valence de } M'}{2}$$

x est 0 ou un nombre supérieur à 0 et ne pas supérieur à 1,
y est un nombre compris entre 0,1 et 1, et
z est un nombre dépendant de la valence de M″ et calculé par

$$z=x+y \text{ (la valence de } M'')\text{.}$$

2. Électrolyte selon la revendication 1, caracterisé en ce que X représente un atome d'iode.

3. Électrolyte selon l'une quelconque des revendications 1 ou 2, caracterisé en ce que M′ et M″ sont identiques ou différents et répresentent un ou plusieurs éléments pris du groupe d'alumine, de bore et de calcium.

4. Électrolyte selon la revendication 1, caracterisé en ce que le matériel "A" est $LiAlO_2$ et le matériel "B" est $CaI_2$.

5. Électrolyte selon la revendication 1, caracterisé en ce que le matériel "A" est $LiBO_2$ et le matériel "B" est $CaI_2$.

6. Électrolyte selon l'une quelconque des revendications 1 à 5, comprenant de l'alumine en une proportion ne dépassant pas 50% par mole.

7. Électrolyte selon l'une quelconque des revendications 1 à 5, la composition duquel étant telle qu'elle résulterait de l'interdiffusion de 5 à 40% par mole du matériel "B", de 30 à 90% par mole du matériel "A", de 0 à 50% par mole d'alumine.

8. Électrolyte selon l'une quelconque des revendications 1 à 7 présentant une conductivité d'environ $10^{-6}$ $(\text{ohm-cm})^{-1}$ ou supérieure.

9. Procédé de fabrication d'une électrolyte solide selon l'une quelconque des revendications 1 à 8 comprenant l'interdiffusion d'un mélange du matériel "A" et du matériel "B" avec de l'alumine ou non.

10. Procédé selon la revendication 9, qui consiste à maintenir le mélange du matériel "A" et du matériel "B" à une température au dessus du point de fusion de l'un des composants pendant au moins 0,25 heures, à refroidir brusquement et à broyer pour obtenir une poudre fine.

11. Pile électrochimique comprenant une anode en lithium, et un électrolyte solide selon l'une quelconque des revendications 1 à 8.

**Patentansprüche**

1. Feststoff-Elektrolyt für elektrochemische Zellen, der ein ineinander diffundiertes Gemisch aus Lithium, Sauerstoff, einem Halogenid und mindestens einem M′ und/oder M″ umfaßt, wobei die Zusammensetzung des Elektrolyts so beschaffen ist, wie sie sich aus dem Ineinanderdiffundieren eines Materials "A" und einem Material "B" mit oder ohne Tonerde ergibt, wobei Material "A" durch die Formel

$$LiM'O_n$$

und Material "B" durch die Formel

$$Li_xM''_yX_z$$

wiedergegeben werden kann und in den Formeln
X ein Halogenatom bedeutet,
M′ und M″ gleich oder verschieden sein können und mindestens ein Element aus den Gruppen IIA, IIIB, IIB, IVA, IVB, VA und VB des Periodensystems bedeuten,
n eine Zahl ist, die von der Wertigkeit von M′ abhängt und durch

$$n=\frac{1+\text{Wertigkeit von } M'}{2}$$

berechnet wird,
x=0 ist oder eine Zahl größer als 0 und nicht größer als 1,
y eine Zahl von 0,1 bis 1 ist und
z eine Zahl ist, die von der Wertigkeit von M″ abhängt und berechnet wird durch

$$z=x+y \text{ (Wertigkeit von } M'')\text{.}$$

2. Elektrolyt nach Anspruch 1, bei dem X für ein Iodatom steht.

3. Elektrolyt nach Anspruch 1 oder 2, bei dem M′ und M″ gleich oder verschieden sind und ein oder mehrere Elemente (aus der Gruppe) Aluminium, Bor und Calcium bedeuten.

4. Elektrolyt nach Anspruch 1, bei dem Material "A" $LiAlO_2$ und Material "B" $CaI_2$ ist.

5. Elektrolyt nach Anspruch 1, bei dem Material "A" $LiBO_2$ und Material "B" $CaI_2$ ist.

6. Elektrolyt nach einem der Ansprüche 1 bis 5, der Tonerde in einr Menge von nicht mehr als 50 mol-% enthält.

7. Elektrolyt nach einem der Ansprüche 1 bis 5 mit einer Zusammensetzung, die sich aus dem Ineinanderdiffundieren von 5 bis 40 mol-% Material "B", 30 bis 90 mol-% Material "A" und 0 bis 50 mol-% Tonerde ergeben würde.

8. Elektrolyt nach einem der Ansprüche 1 bis 7 mit einer Leitfähigkeit von etwa $10^{-6}$ $(Ohm\text{-}cm)^{-1}$ oder darüber.

9. Verfahren zur Herstellung eines Feststoff-Elektrolyten nach einem der Ansprüche 1 bis 8, gekennzeichnet durch das Ineinanderdiffundieren eines Gemisches aus Material "A" und Material "B" mit oder ohne Tonerde.

10. Verfahren nach Anspruch 9, bei dem das Gemisch aus Material "A" und Material "B" während mindestens 0,25 h bei einer Temperatur oberhalb des Schmelzpunktes einer der Komponenten gehalten, abgeschreckt und zu einem feinen Pulver vermahlen wird.

11. Elektrochemische Zelle mit einer Lithiumanode und einem Feststoff-Elektrolyten nach einem der Ansprüche 1 bis 8.